# EUROPÄISCHE PATENTSCHRIFT

(11) **EP 0 555 857 B1**
(45) Veröffentlichungstag und Bekanntmachung des Hinweises auf die Patenterteilung: **31.07.1996**
(21) Anmeldenummer: 93102166.1
(22) Anmeldetag: 11.02.1993
(51) Int. Cl.: B62D 5/12, B62D 7/15, B62D 7/14

(54) **Hinterradlenkvorrichtung**
Rear wheel steering
Direction pour les roues arrière

(30) Priorität: 12.02.1992 DE 4204123
(43) Veröffentlichungstag der Anmeldung: 18.08.1993
(73) Patentinhaber: SIEMENS AKTIENGESELLSCHAFT, D-81541 München (DE)
(72) Erfinder: Gerl, Gerhard, Dipl.-Ing. (FH), W-8400 Regensburg (DE); Lacher, Franz, Dipl.-Ing. (FH), W-8409 Tegernheim (DE); Ulm, Michael, Dr.-Ing., W-8401 Alteglofsheim (DE); Patze, Helmut, Dipl.-Ing. (FH), W-8773 Frammersbach (DE); Bartholomäus, Reiner, Dipl.-Ing. (FH), W-8781 Neuendorf (DE); Zaiser, Liebhart, W-8782 Karlstadt-Wiesenfeld (DE); Neuhaus, Rolf, Dr., W-8770 Lohr (DE)
(74) Vertreter: Wagner, Karl H., Dipl.-Ing.

(56) Entgegenhaltungen:
- EP-A- 0 350 020
- EP-A- 0 419 925
- DE-A- 3 811 312
- DE-A- 4 126 898
- DE-A- 4 133 006
- DE-U- 9 205 781

## Beschreibung

Die Erfindung bezieht sich auf eine Hinterradlenkung gemäß dem Oberbegriff des Anspruchs 1.

Hinterradlenkungen der eingangs genannten Art sind in großer Anzahl bekannt. Insbesondere ist es bereits bekannt, zur Betätigung eines Hydraulik- oder Stellzylinders in der Form eines Gleichgangzylinders ein 4/3 Proportionalventil zu verwenden. Im Gleichgangszylinder selbst ist eine Klemmvorrichtung vorgesehen, die durch in der Stellhydraulik vorhandende hydraulische Mittel lösbar ist. Diese bekannte Hinterradlenkung benötigt verhältnismäßig viele in ihrem Aufbau nicht immer einfache Komponenten, was zu verhältnismäßig hohen Kosten führt. In diesem Zusammenhang sei speziell auf DE-A-4 133 006 (am 30.7.92 veröffentlicht) hingewiesen.

Der vorliegenden Erfindung liegt die Aufgabe zugrunde, eine Hinterradlenkung, gemäß dem Oberbegriff des Anspruchs 1, derart auszubilden, daß die Herstellungs- und Wartungskosten minimiert werden, wobei ein betriebssicherer und prüfbarer Betrieb möglich sein soll.

Zur Lösung dieser Aufgabe sieht die Erfindung bei einer Hinterradlenkung der eingangs genannten Art die im Kennzeichnungsteil des Anspruchs 1 genannten Maßnahmen vor. Bei der erfindungsgemäßen Hinterradlenkung wird so wird eine Stellhydraulik bei Auftreten eines Störfalls (Ausfall der Pumpe und/oder der Steuerelektronik) ein automatisches Festklemmen des Stellzylinders in seiner jeweiligen Stellung bewirkt. Ferner sollen ruckartige Betriebsvorgänge vermieden werden.

Bevorzugte Ausgestaltungen der Erfindung ergeben sich aus den Unteransprüchen.

Weitere Vorteile, Ziele und Einzelheiten der Erfindung ergeben sich aus der Beschreibung von Ausführungsbeispielen anhand der Zeichnungen; in der Zeichnung zeigt:
Fig. 1 ein Schaltbild einer Hinterradlenkung gemäß dem Stand der Technik;
Fig. 1a ein die Grundzüge der Erfindung darstellendes Schaltbild;
Fig. 2 eine schematische Darstellung einer Hinterradlenkung gemäß einem ersten Ausführungsbeispiel der Erfindung;
Fig. 3 ein Schaltbild eines zweiten Ausführungsbeispiels der Erfindung;
Fig. 4 eine Einzelheit des zweiten Ausführungsbeispiels
Fig. 5 ein drittes Ausführungsbeispiel;
Fig. 6 ein viertes Ausführungsbeispiel;
Fig. 7 ein fünftes Ausführungsbeispiel (in Fig. 6 von links) der Hinterradlenkung;
Fig. 8 ein sechstes Ausführungsbeispiel
Fig. 9 ein siebtes Ausführungsbeispiel der Erfindung.
Fig. 10 ein achtes Ausführungsbeispiel der Erfindung.

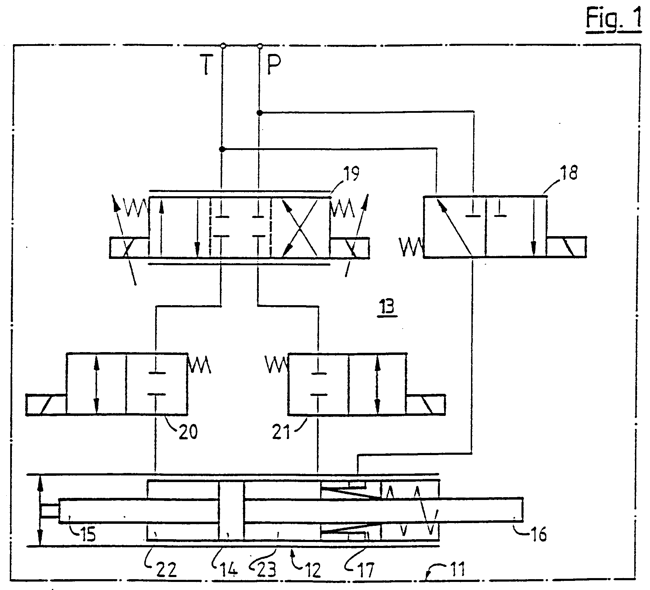

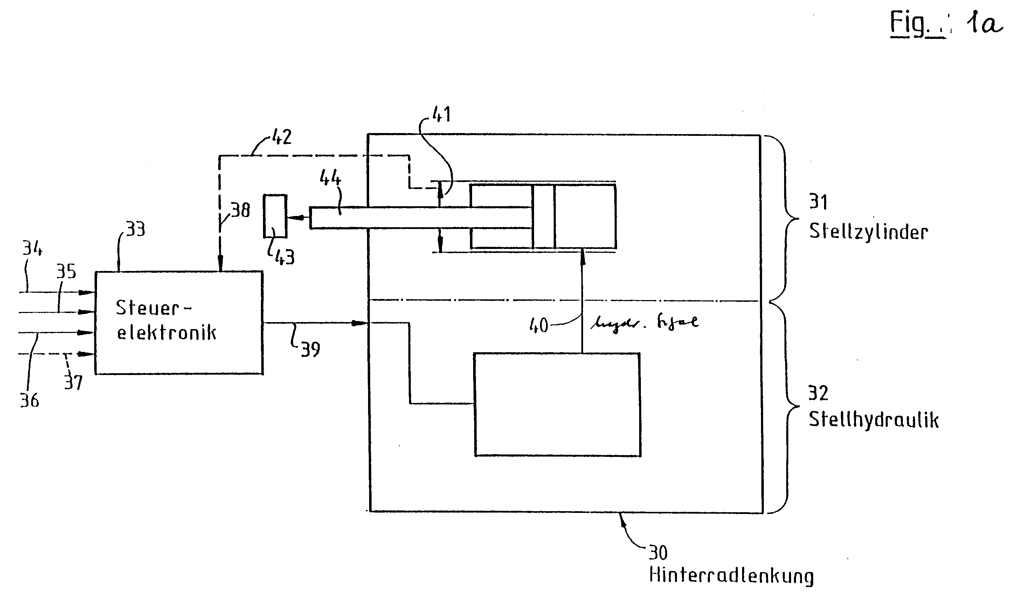

Fig. 1 zeigt ein Schaltbild einer gemäß DE-A-4 133 006 bekannten Hinterradlenkung 11, die einen Hydraulikzylinder als Gleichgangszylinder 12 (Stellzylinder) sowie eine Stellhydraulik 13 aufweist.

Der Stellzylinder 12 umfaßt einen Kolben 14, an dem beidseitig Kolbenstangen 15, 16 befestigt sind. An der Kolbenstange 16 ist eine Klemmvorrichtung 17 angebracht, die durch ein 3/2-Wegeventil 18 lösbar ist.

Ein 4/3-Proportional-Wegeventil 19 kann durch elektrische Signale angesteuert werden, um über ein erstes 2/2-Wegeventil 20 die eine Zylinderkammer 22 oder über ein zweites 2/2-Wegeventil 21 die andere Zylinderkammer 23 mit Druckmittel zur beliefern, um so einen Lenkvorgang auszulösen.

Fig. 1a zeigt eine gemäß der Erfindung ausgebildete Hinterradlenkung 30, und zwar einen Stellzylinder 31, sowie eine Stellhydraulik 32 aufweisend. Eine Steuerelektronik 33 hat mehrere Eingänge 34 38 und liefert ein elektrisches Ausgangssignal 39 an die Stellhydraulik 32. Als Eingangsgrößen für die Steuerelektronk 33 kommen in bekannter Weise z. B. der Lenkraddrehwinkel, die Fahrgeschwindigkeit usw. in Betracht. Ferner kann beispielsweise über Leitung 42 und Eingang 38 Information von der Hinterradlenkung 30 zur Steuerelektronik 33 rückgeführt werden. Es ist klar, daß das elektrische Ausgangssignal 39 nicht unbedingt ein einziges Signal sein muß, sondern unterschiedliche Informationen enthalten kann, je nach dem wie sie für die Stellhydraulik 32 erforderlich ist. So könnte beispielsweise das Ausgangssignal 39, wenn es die Ansteuerung der Stellhydraulik 13 gemäß Fig. 1 bewirken sollte, Ansteuersignale oder Ansteuerströme aufweisen, die zur Erregung der beiden Proportionalmagnete des Ventils 19 bzw. der Porportionalmagnete der Ventile 18, 20 und 21 dienen. Aus der folgenden Beschreibung wird sich ergeben, daß im Falle der vorliegenden Erfindung das Ausgangsignal 39 praktisch nur zwei individuelle Steuersignale enthalten muß, und zwar eines zur Ansteuerung eines Proportionalmagneten, der ein Lenkventil steuert, und eines zur Ansteuerung eines Schaltmagneten, der ein noch zu beschreibendes Schaltventil ansteuert.

In Fig. 1a wird veranschaulicht, daß die Stellhydraulik 32 das elektrische Signal 39 in ein hydraulisches Signal 40 umwandelt, welches dem Stellzylinder 31 zugeführt wird, der erfindungsgemäß als ein Differentialzylinder 31 ausgebildet ist. Der Differentialzylinder 31 besitzt nur eine einzige Kolbenstange 44, die ein Lenkgestänge 43 oder dergleichen bewegt. Ferner ist die Kolbenstange 44 vorzugsweise ein Redundanzwegaufnehmer 41 zugeordnet, dessen Ausgangssignal auf der bereits erwähnten Leitung 42 der Steuerelektronik 33 zuführbar ist.

Zusätzlich kann bei notwendigem, beidseitigem Kolbenabgang aus dem Stellzylinder 31 eine zweite, dünnere Kolbenstange als die Kolbenstange 44 angebracht sein.

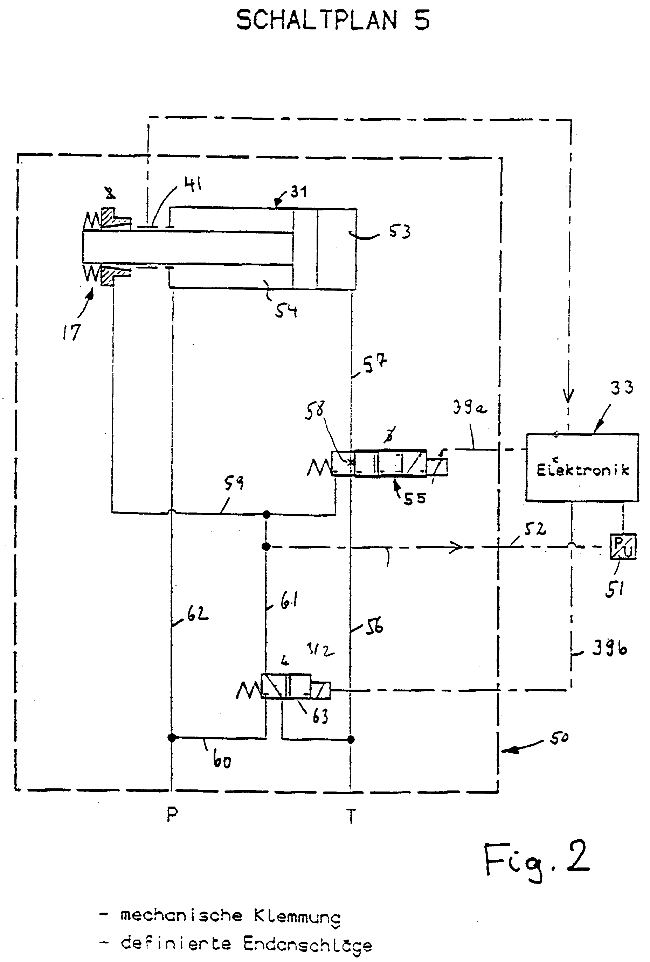

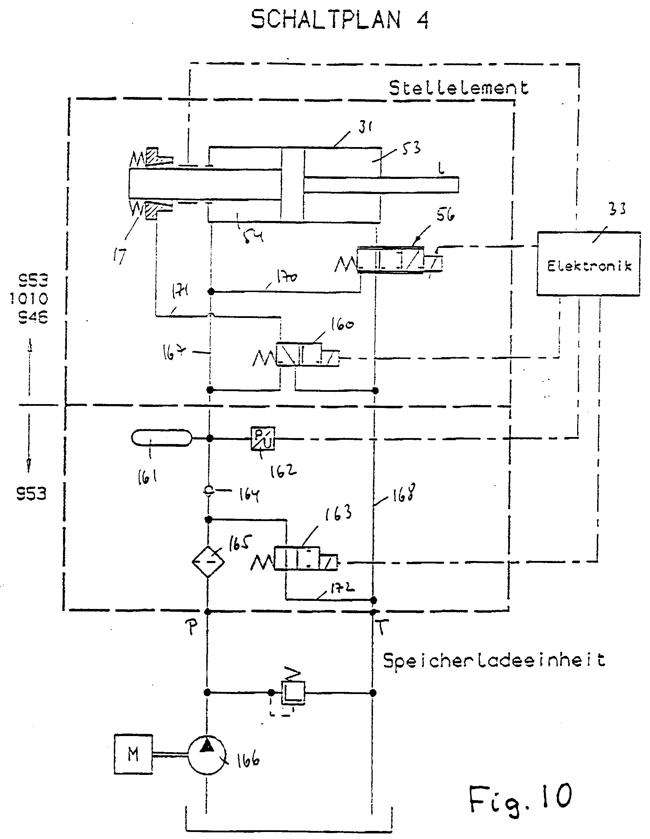

Bevor auf spezielle Ausführungsbeispiele der Fig. 2 bis 10 näher eingegangen wird, sei nochmals bemerkt, daß erfindungsgemäß die Stellzylinder nicht als Gleichgangzylinder, sondern als Differentialzylinder ausgebildet sind und zwar angesteuert auf ihrer großen Fläche (Kolbenkammer) durch ein Dreiwegeproportionalventil, während an der Stangenkammer (Ringfläche) der Versorgungsdruck liegt.

Fig. 2 zeigt eine Hinderradlenkung 50, die von einer Steuerelektronik 33 betätigt wird. Das in Fig. 1a mit 39 bezeichnete Steuersignal liegt hier in der Form von zwei individuellen Steuersignalen 39a und 39b vor. Eingangssignale empfängt die Steuerelektronik 33 von einem vorzugsweise redundanten Weggeber 41, sowie von einem Druckgeber 51, der über eine Leitung 52 mit der Hinterradlenkung 50 verbunden ist.

Die Hinterradlenkung 50 selbst weist einen Differentialstellzylinder 31 auf, der eine Kolben- oder Kopfkammer 53 und eine Stangenkammer 54 bildet. Die Klemmvorrichtung ist wiederum mit 17 bezeichnet. Ein Dreiwegeproportionalventil 55 wird durch ein Steuersignal 39a angesteuert und liegt in einer Verbindungleitung 56, 57 zwischen Tankanschluß T und Kopfkammer 53. Das Proportionalventil 55 besitzt eine Drosselstellung, die dann eingenommen, wenn das Ventil 55 nicht erregt ist. In dieser Position liegt eine Drossel 58 zwischen der Kolbenkammer 53 und dem Tankanschluß T.

Zwischen dem verbleibenden Anschluß des Dreiwegeproportionalventils 55 und der Klemmvorrichtung 17 läuft eine Leitung 59. Die Leitung 59 steht ferner über eine Leitung 60, 61 mit dem Pumpenanschluß P in Verbindung. In der Leitung 60, 61 liegt ein 3/2-Wegeventil 63, welches in seiner gezeigten, nicht erregten Ruhestellung die Verbindung zwischen Leitung 60 und 61 blockiert und die Leitung 61 mit dem Tankanschluß T verbindet. Ferner ist der Anschluß P durch eine Leitung 62 mit der Stangenkammer 54 verbunden. Der Versorgungsdruck wirkt uneingeschränkt auf die Ringfläche d.h. in der Stangenkammer des Differentialzylinders 31, auch bei Abschalten des Drucks auf das Proportionalventil über Ventil 63.

Im Betriebsfall legt die Elektronik 33 ein Steuersignal 39a an das Proportionalventil 55, so daß dieses je nach der gewünschten Lenkung mehr oder weniger Druck in die Kammer 53 eintreten läßt, wobei in diesem Zustand normalerweise das Schaltventil 63 ebenfalls durch ein Steuersignal 39b erregt ist und sich in der nicht gezeigten Schaltstellung befindet, d. h. P auf Leitung 61 und 59 zur Verfügung stellt. Der Druckgeber 51 bezieht Information über den auf Leitung 59 vorhandenen Druck über eine Leitung 52, und liefert diese an die Steuerelektronik.

Im "Failsafe"-Fall fährt das Proportionalventil 55 in die gezeigte Endstellung, d. h. die große Fläche des Differentialzylinders 31 wird mit dem Tank T über eine im Ventil 55 vorgesehene Drossel 58 verbunden. Gleichzeitig fährt das Schaltventil 63 in die gezeigte stromlose Stellung und verbindet die Klemmvorrichtung 17 und auch die Versorgungsleitung 59 des Proportionalventils 55 mit dem Tank T.

Durch die mechanische Klemmung, die über das Schaltventil 63 elektronisch gesteuert wird, kann in jeder beliebiger Position geklemmt werden. Bei Ausfall der mechanischen Klemmung erfolgt durch die uneingeschränkte Verbindung der P-Leitung 62 auf den Differentialzylinder 31, die Fail-safe-Position auf den rechten definierten Endanschlag. In diesem Fall fährt der Stellzylinder 31 über die Drossel 58 im Ventil 55 gedrosselt auf den rechten Anschlag.

Der Drucksensor 51 in der Verbindungsleitung vom Schaltventil 63 zum Proportionalventil 55 erkennt, daß Druck in dieser Leitung vorhanden ist, d. h., daß das Schaltventil 63 geschaltet hat, oder, daß kein Druck in der Leitung vorhanden ist. In diesem Fall müßte das Klemmsystem 17 klemmen. Wenn trotzdem über den Wegaufnehmer 41 am Differentialzylinder 31 eine Bewegung erkannt wird, so kann die Steuerelektronik 33 daraus schließen, daß die mechanische Klemmvorrichtung 17 nicht funktioniert.

Wie bereits erwähnt, ist am Differentialzylinder 31 ein redundanter Weggeber vorgesehen, vorzugsweise in der Form eines sogenannten redundanten Potentiometers, welches doppelte Widerstandsbahnen und doppelte Abgriffe besitzt. Auch die Eingänge zur Steuerelektronik 33 sind doppelt ausgeführt.

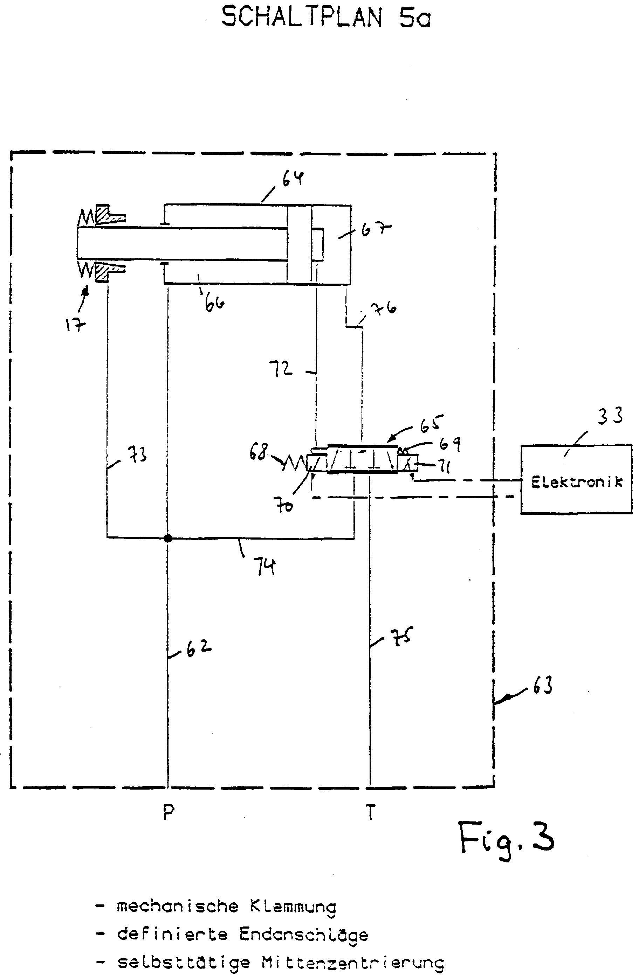

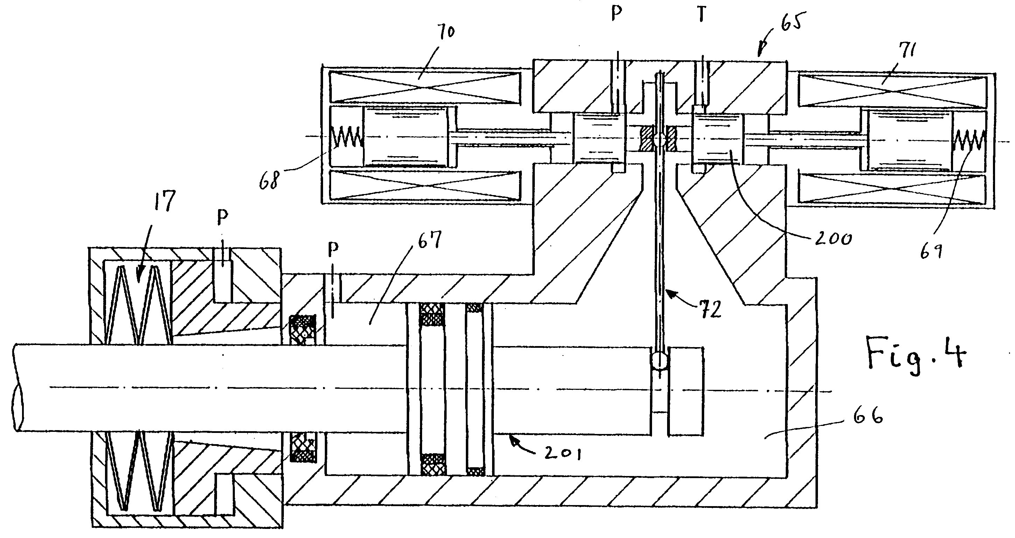

Die Fig. 3 und 4 zeigen ein weiteres Ausführungsbeispiel der Erfindung. Bei diesem Ausführungsbeispiel dient die Elektronik 33 zur Steuerung einer Hinterradlenkung 63, die einen Differentialstellzylinder 64 sowie ein sozusagen reines Dreiwegeproportionalventil 65 aufweist.

Das Dreiwegeproportionalventil 65 ist selbstätig mittenzentriert und weist zu diesem Zweck zwei Federn 68, 69 auf (vgl. auch Fig. 4) auf. Ferner sind gegenüberliegend zwei Proportionalmagnete 70, 71 vorgesehen, und eine mechanische Rückführung 72 erstreckt sich zwischen dem Kolben des Proportionalventils 65 sowie dem Kolben (bzw. einer Verlängerung desselben) des Stellzylinders 64. Im einzelnen ist hier die Rückführung ein Biegebalken, der im Gehäuse eingespannt ist und im Ventilkolben 200 und dem Arbeitskolben 201 beweglich gelagert ist. Die Rückführung kann auch ein gelagerter Winkelhebel oder ein Abtaststift sein, der eine schiefe Ebene auf dem Kolben abfährt. Die Anordnung der Druckversorgung und der Federn 68, 69 in den Magneten 70, 71 bewirkt bei "Strom aus" eine Mittenzentrierung des Ventils 65 und des Arbeitskolbens. Im normalen Betrieb liegt eine mechanisch-hydraulische Kraftregelung nach dem Folgeprinzip vor. Die Fig. 3 zeigt also eine selbsttätige Mittenzentrierung bei intakter Druckversorgung. Fällt diese aus, hat auch das Klemmsystem keinen Druck mehr und klemmt die Kolbenstange in der aktuellen Lage. Der Stellzylinder 64 besitzt ferner eine Kolben- oder Kopfkammer 66 und eine Stangenkammer 67.

Wie insbesondere in Fig. 3 gezeigt, ist der Pumpenanschluß P der Hinterradlenkung 63 mit der Stangenkammer 66 über eine Leitung 62 verbunden. Eine Abzweigleitung 73 von Leitung 62 steht mit der Klemmvorrichtung 17 in Verbindung. Eine weitere Leitung 74 verbindet die Leitung 62 mit dem einen Eingang des Proportionalventils 65, während der andere Eingang über eine Leitung 75 mit dem Tankanschluß verbunden ist. Der Ausgang des Proportionalventils 65 steht über eine Leitung 76 mit der Kopfkammer 67 in Verbindung. Über hier nicht näher gezeigte Leitungen steht die Steuerelektronik 33 mit den Proportionalmagneten 70 und 71 in Verbindung um diese anzusteueren.

Die Fig. 4 zeigt eine bevorzugte Ausgestaltung der Schaltung gemäß Fig. 3, wobei hier das Proportionalventil 65 an den Stellzylinder 64 angebaut ist. Dies ergibt einen kompakten Aufbau und macht den bei den vorangegangenen Ausführungsbeispielen erforderlichen Weggeber unnötig. Neben der bereits erwähnten selbstätigen Mittenzentrierung sieht die Hinterradlenkung 63 gemäß Fig. 3 eine mechanische Klemmung für den Stellzylinder vor, sowie definierte Endanschläge.

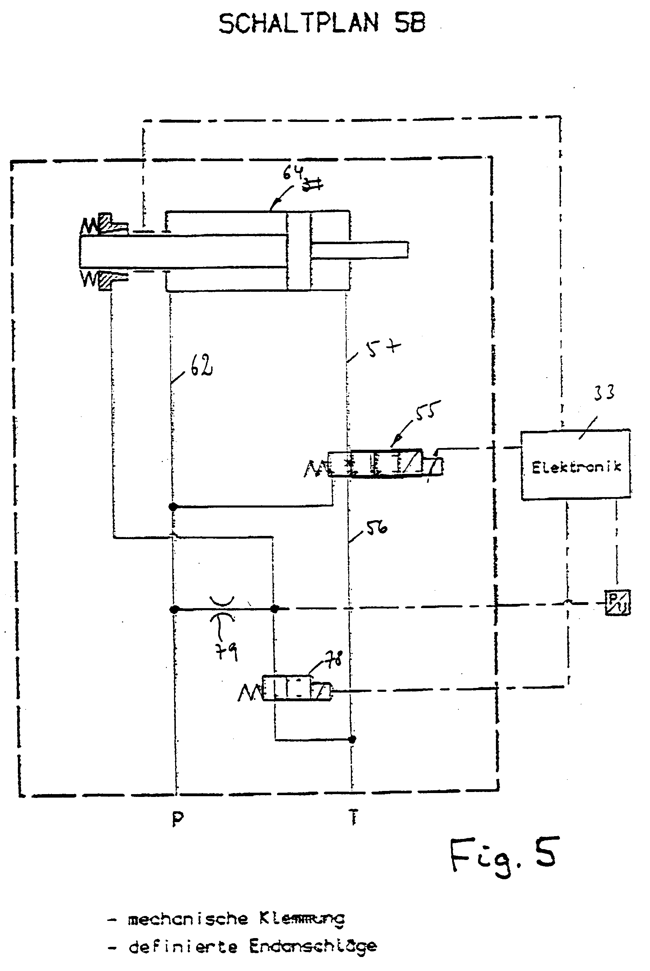

Das Ausführungsbeispiel gemäß Fig. 5 ist eine Abwandlung des Ausführungsbeispiels der Fig. 2 insofern, als das in Fig. 2 vorhandene 3/2-Wegeventil 63 hier durch ein kostengünstigeres 2/2-Wegeventil 78 ersetzt ist. Zudem ist hier eine Düse 79 vorgesehen, die einen Druckabfall erzeugt, so daß stets ein etwas niedrigerer Druck als der am Anschluß P vorhandene Druck zum Klemmen des Kolbens des Stellzylinders 64 vorhanden ist. Im übrigen kann auf die Beschreibung der Fig. 2 bzw. der Fig. 3 verwiesen werden.

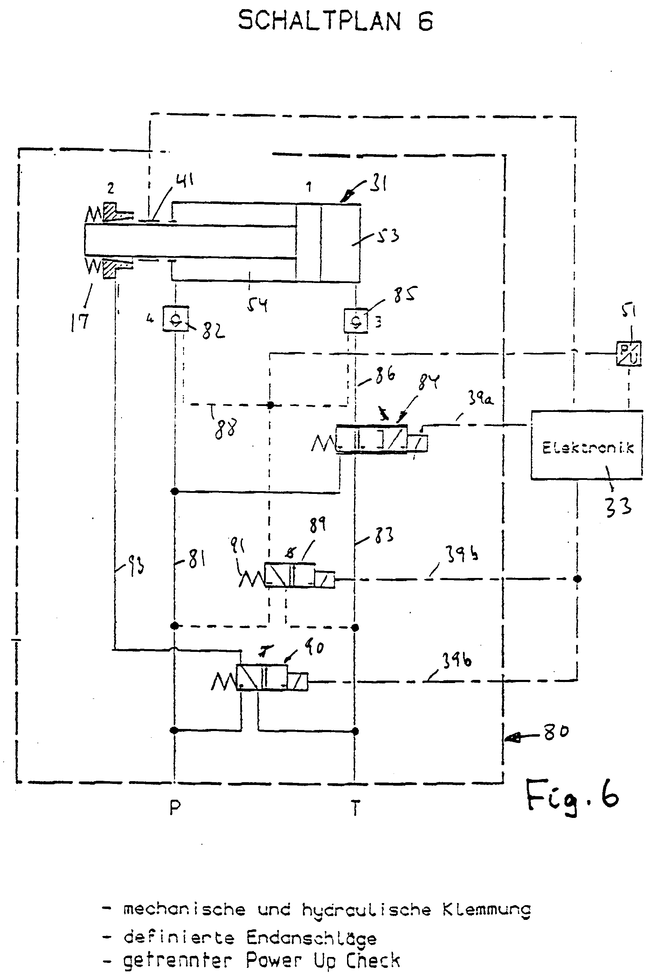

Ein weiteres Ausführungsbeispiel einer Hinderradlenkung 80 ist in Fig. 6 gezeigt. Die Steuerelektronik 33 liefert hier wiederum zwei Steuersignale, nämlich 39a sowie 39b an die Hinterradlenkung 80. Ihrerseits empfängt die Steuerelektronik 33 die Information vom Druckfühler 51 sowie von einem Wegsensor 41.

Die Hinterradlenkung 80 umfasst wiederum die Klemmvorrichtung 17 und einen Stellzylinder 31 mit einer Kolben- oder Kopfkammer 53 und einer Stangenkammer 54. Der Pumpenanschluß P ist über eine Leitung 81 sowie ein Rückschlagventil 82 mit der Kammer 54 verbunden und der Tankanschluß T ist über eine Leitung 83 ein Steuerventil (ein reines 3-Wege-Proportionalventil) 84, eine Leitung 86 sowie ein Rückschlagventil 85 mit der Kammer 53 verbunden. Die beiden Rückschlagventile 82 und 85 sind entsperrbar und zu diesem Zweck ist eine Steuerleitung 88 vorgesehen, die mit dem Ausgang eines 3/2-Schaltventils 89 verbunden ist. Eingangsseitig steht das Schaltventil 89 zum einen mit der Leitung 81 und zum anderen mit der Leitung 83 in Verbindung. Das Schaltventil 89 ist in die gezeigte Position durch eine Feder 91 vorgespannt und kann durch das Signal 39b geschaltet werden.

Ferner ist ein weiteres 3/2-Schaltventil 90 vorgesehen, welches durch eine Feder 92 in die gezeigte Position vorgespannt ist. Das Ventil wird ebenfalls durch das Signal 39b erregt. Ausgangsseitig steht das Schaltventil 90 über eine Leitung 93 mit der Klemmvorrichtung in Verbindung. Eingangsseitig liegt das Schaltventil 90 zum einen am Pumpenanschluß und zum anderen am Tankanschluß.

Bei diesem Ausführungsbeispiel besteht eine Besonderheit darin, daß neben der mechanischen Klemmung auch noch eine hydraulische Klemmung vorgesehen ist. Ferner sind definierte Endanschläge vorgesehen. Das Proportionalventil 84 hat verglichen mit vorausgegangenen Ausführungsbeispielen nicht mehr die gedrosselte Endstellung, sondern ist - wie erwähnt - ein reines Dreiwegeproporionalventil. Neben dem 3/2-Wegeschaltventil 89 ist hier noch ein weiteres 3/2-Wegeschaltventil 90 hinzugekommen. Das Schaltventil 90 schaltet nur den Druck zu dem mechanischen Klemmsystem 17 ein und aus. Das Schaltventil 89 dient zur Betätigung der beiden entsperrbaren Rückschlagventile 82 und 85.

Nimmt man an, daß der Verbindungsleitung 88 vom Schaltventil 89 zu den Rückschlagventilen 82 und 85 Tankdruck herrscht (d. h. das Schaltventil 89 ist stromlos geöffnet) so schließen die beiden Rückschlagventile 82 und 85 und blockieren den Differentialzylinder 31 hydraulisch.

Der Versorgungsdruck steht also bei abgeschalteten Ventilen 89 und 90 am Rückschlagventil 82 und am Proportionalventil 84 an. Dadurch ist es möglich, einen getrennten "Power-up-check" vorzunehmen. D. h., wenn das Schaltventil 90 abgeschaltet ist und das Schaltventil 6 eingeschaltet ist, kann mit dem Proportionalventil 5 geprüft werden, ob das mechanische Klemmsystem funktioniert.

Umgekehrt ist es auch möglich, nur die hydraulische Klemmung dann zu testen, wenn das Schaltventil 90 eingeschaltet und das Schaltventil 89 ausgeschaltet ist.

Auch bei diesem Ausführungsbeispiel ist vorzugsweise wiederum ein Weggeber 41 in Form eines redundanten Potentiometers vorhanden. Ferner ist auch der bereits erwähnte Drucksensor 51 angeschaltet, der erkennt, ob der Druck in der Steuerleitung zwischen den Ventilen 89, 82 und 85 vorhanden ist oder nicht.

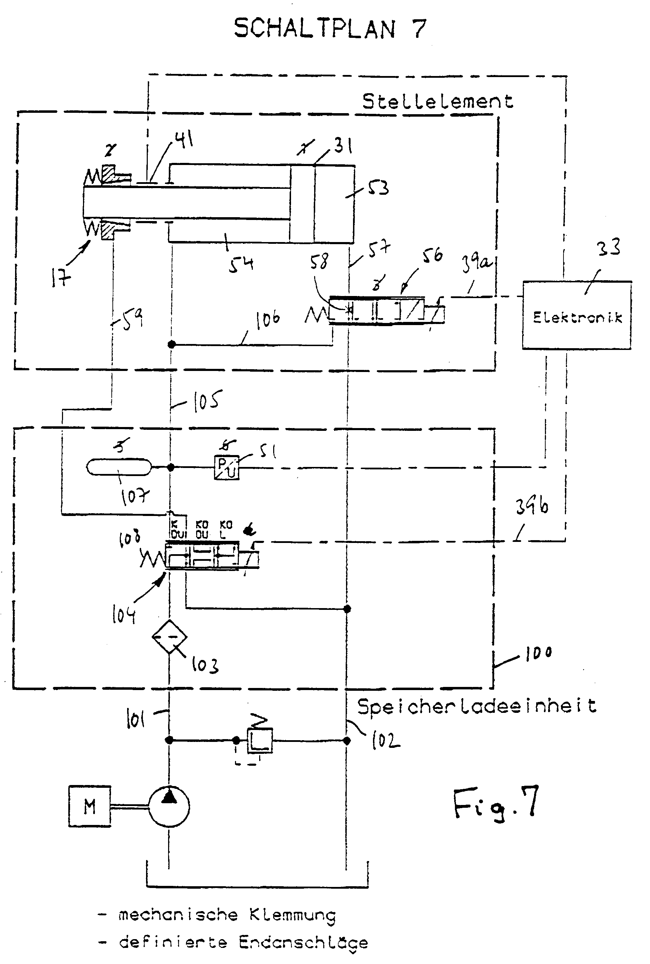

Fig. 7 zeigt ein Ausführungsbeispiel ähnlich der Fig. 2, wobei aber hier zusätzlich zum Stellelement noch eine Speicherladeeinheit 100 vorgesehen ist. Im übrigen sei auf die Schaltung gemäß Fig. 2 verwiesen.

Zusätzlich erkennt man in Fig. 7 eine motorgetriebene Pumpe zusammen mit einem Druckbegrenzungsventil. Die Speicherladeeinheit 100 steht über eine Leitung 101 mit der Pumpe und über eine Leitung 102 mit dem Tank in Verbindung. Die Leitung 101 geht zu einem Filter und von dort zu einem Schaltventil 104. Ausgangseitig steht das Schaltventil über eine Leitung 105 mit der Stangenkammer 54 in Verbindung. Die vom Tank kommende Leitung 102 geht direkt zu einem Eingang des eine Drossel 58 aufweisende Proportionalventils 56, dessen anderer Eingang über eine Leitung 106 mit der Leitung 105 verbunden ist.

Mit der Leitung 105 ist ferner ein Speicher 107 sowie der Druckfühler 51 verbunden.

Das Schaltventil 104 wird durch Signal 39b angesteuert und hat vorzugsweise drei Stellungen, wobei es die in Fig. 7 gezeigte Stellung infolge der Kraft einer Feder 108 dann annimmt, wenn keine Erregung vorhanden ist. In der gezeigten Schaltstellung des Ventils 104 klemmt die Klemmvorrichtung 17 und es besteht druckloser Umlauf. In der mittleren Schaltstellung ist die Klemmung offen und druckloser Umlauf liegt vor. In der rechts dargestellten Stellung ist die Klemmung wiederum offen und der Speicher wird geladen.

Verglichen mit dem Ausführungsbeispiel der Fig. 2 ist das Schaltventil 63 gemäß Fig. 2 nunmehr im Speicherladeventil 104 angeordnet. Das Speicherlade- oder Schaltventil 104 übernimmt neben dem Abschalten des Versorgungsdrucks auf den Differentialzylinder 31 und das Proportionalventil 56 noch die Abschaltfunktion der mechanischen Klemmung und darüber hinaus noch das Laden und Entladen des Speichers 107. Dies geschieht in der folgenden Weise: Der Drucksensor 51 erkennt, welcher Ladedruck im Speicher 107 vorhanden ist. Im einzelnen bedeuten dabei die drei Positionen des Schaltventils K/DU, KU/DU und KO/L folgendes: K/DU bedeutet stromlos in die Position K/DU gefahren; auf Klemmsystem 2 wirkt Tankdruck, d. h. Klemmung geschlossen; Druckloser Umlauf für die Pumpe, Speicher geladen. Mittelstellung KO/DU bedeutet druckloser Umlauf; Speicherdruck 107 wirkt auf Klemmsystem 17, d. h. das Klemmsystem 17 öffnet, Differentialzylinder 31 fährt druckmäßig aus Speicher 107. KO/L bedeutet Speicherdruck ist zu gering; muß geladen werden; Klemmung ist offen, da Druck auf Klemmsystem 17 wirkt und öffnet. Gleichzeitig kann in den Funktionen KO Mittelstellung und rechte Stellung auch immer geregelt werden über das Proportionalventil 56, Differentialzylinder 31 und die Rückführung über die beiden Potentiometer. Zu erwähnen ist, daß das Ventil 104 einmal mit dem Proportionalmagnet 56 betrieben werden kann, um die Mittelstellung zu erreichen oder mit zwei getrennten Magneten und Federn. Dabei muß dann die Mittelposition über Zentrierplatten auf rechten und linken Anschlag gehalten werden.

Als Leitungen zwischen dem Stellelement und dem Speicherladeventilblock 100 sind vorhanden: Leitung Klemmsystem (Steuerleitung), Druckversorgungsleitung, Tankleitung.

Eingangssignale zur Elektronik sind Drucksensorsignal und Potentiometersignal. Ausgangssignale sind Signal zum Regelmagneten des Ventils 56 und zum Schaltmagneten bzw. zu zwei Schaltmagneten des Ventils 104. Die Schaltfunktion des Schaltventils 104 wird über Drucksensor 51 über die Elektronik 33 zusätzlich erkannt.

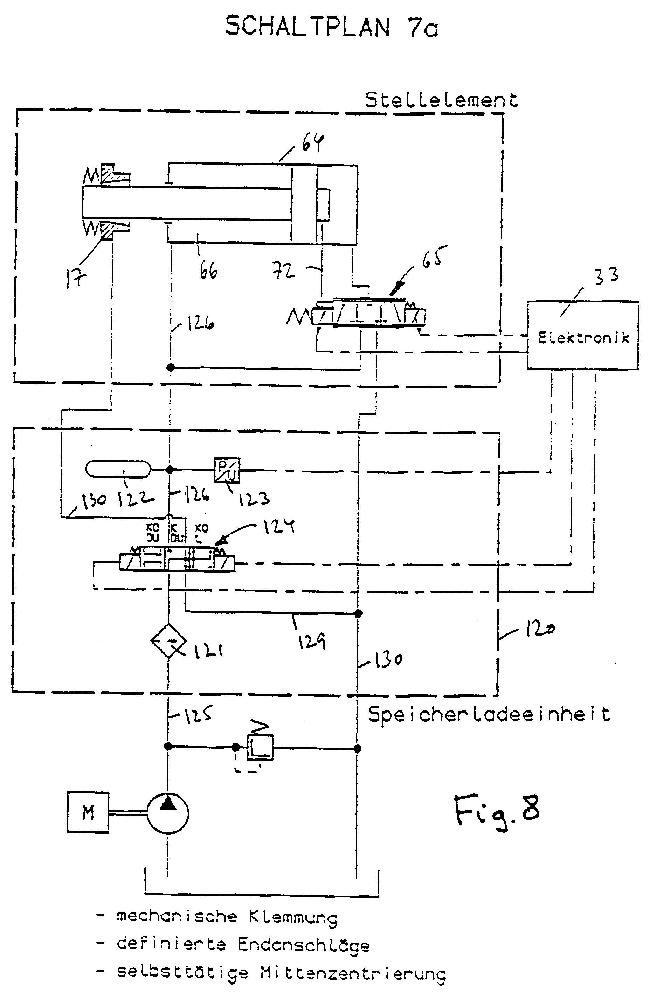

Das Ausführungsbeispiel gemäß Fig. 8 ist speziell eine Weiterentwicklung des Ausführungsbeispiels gemäß Fig. 3, wobei hier ähnlich wie in Fig. 7 zusätzlich eine Speicherladeeinheit 100 dargestellt ist. Es sei insofern sowohl auf die Ausführungen hinsichtlich der Fig. 3 als auch der Fig. 7 verwiesen. Kurz gesagt ist hier ein Stellzylinder 64 zusammen mit einer Klemmvorrichtung 17 gezeigt. Ferner ist eine mechanische Rückführung 72 zwischen dem Stellzylinder 64 und dem Dreiwegeproportionalventil 65 vorgesehen. Das Dreiwegeproportionalventil besitzt ähnlich wie in Fig. 3 zwei Proportionalmagnete und zwei Federn. Die Steuerelektronik 33 dient zur Ansteuerung der beiden Magnete. Die Speicherladeeinheit 120 enthält einen Filter 121 und einen Speicher 122, einen Druckfühler 123 und ein Schaltventil 124. Das Schaltventil 124 besitzt vorzugsweise eine selbstätige Mittenzentrierung. Es besitzt Schaltmagnete sowie Federn auf beiden Seiten, wobei die Schaltmagnete durch von der Elektronik 33 kommende Steuersignale angesteuert werden. Die Schaltstellungsbezeichnungen KO/DU, K/Du und K/OL entsprechen dem was bei Fig. 7 gesagt wurde.

Im einzelnen steht eine Pumpe über eine Leitung 125 und Filter 121 mit einem Eingang des Ventils 124 in Verbindung. Der Ausgang des Ventils 124 steht über eine Leitung 126 mit Stangenkammer 126 in Verbindung und ferner mit einem von zwei Eingängen des Proportionalventils 65. Ferner steht mit der Leitung 126 der Speicher 122 sowie der Druckfühler 123 in Verbindung. Der zweite Eingang des Schaltventils 124 steht über eine Leitung 129 mit einer Leitung 130 in Verbindung, die den Tank mit dem zweiten Anschluß des Proportionalventils 65 verbindet.

Der zweite Ausgang des Schaltventils 124 steht über eine Leitung 130 mit der Klemmvorrichtung 17 in Verbindung.

Die Schaltung gemäß Fig. 8 sieht sowohl eine mechanische Klemmung als auch definierte Endanschläge sowie die bereits erwähnte selbstätige Mittenzentrierung vor.

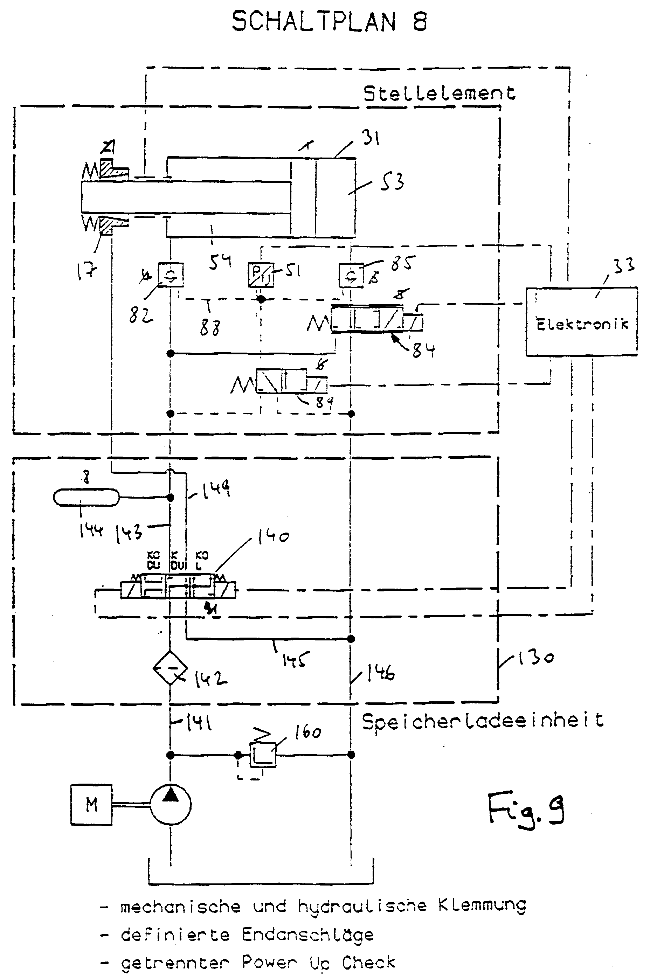

Das Ausführungsbeispiel gemäß Fig. 9 zeigt zusätzlich zum Stellelement die Verwendung einer Speicherladeeinheit 130 für das Ausführungsbeispiel gemäß Fig. 6. Insofern gelten hier die gleichen Ausführungen hinsichtlich der Elemente 31, 53, 54, 82, 88, 51, 85, 84, 89 und 33 wie sie unter Bezugnahme auf Fig. 6 bereits gemacht wurden.

Das Schaltventil 90 der Fig. 6 ist hier mit in das mittenzentrierte Schaltventil 140 integriert. Die Positionsbeschriftungen KO/DU, K/DU und KO/L haben die gleiche Bedeutung wie beim Ausführungsbeispiel gemäß Fig. 8.

Im einzelnen steht eine Pumpe 141 über ein Filter 142 mit dem Schaltventil 140 in Verbindung, welches mit seinem einen Ausgang über eine Leitung 143 und das Rückschlagventil 82 an der Stangenkammer 54 anliegt. Ferner steht ein Speicher 144 mit der Leitung 143 in Verbindung. Der zweite Eingang des Schaltventils 140 liegt über eine Leitung 145 an einer von einem Tank kommenden Leitung 146 die dann über das Proportionalventil 84 und das Rückschlagventil 85 zur Kolben- oder Kopfkammer 53 führt.

Der zweite Ausgang des Schaltventils 140 liegt über eine Leitung 149 an der Klemmvorrichtung 17. Die Steuerelektronik 33 liefert Steuersignale an die beiden Magnete des Schaltventils 140.

Die Schaltfunktion des Ventils 90 (Fig. 6) wird hier ebenfalls durch das Schaltventil 140 übernommen. Ansonsten ist die Funktion des Regelventils 84 die gleiche wie in Fig. 6. Ebenso funktioniert die hydraulische Klemmung 17 über die Ventile 89, 92 und 85 und die mechanische Klemmung 17 über das Ventil 140. Das Speicherladeventil 140 ist genauso aufgebaut wie in Fig. 7. Nur ist dort der Speicher anders angeordnet. In der Mittelpostion des Ventils 140 K/DU wird der Druck über Filtereinlaßelement einmal zum Tank drucklos umgefördert. Der Speicher 144 wird abgeklemmt, d. h. schnelles Klemmen des mechanischen Klemmsystem 17, da die Leitung zum Klemmsystem 17 auf Tank geschaltet ist (Klemmung mechanisch).

Die linke Position des Ventils 7 KO/DU bedeutet druckloser Umlauf, d. h. Speicher 144 ist voll, Differentialzylinder 31 und Proportionalventil 84 werden aus Speicher 144 versorgt (Verbindung Speicher 144 mit Klemmsystem 17, den Rückschlagventilen 82, 85 und dem Proportionalventil 84 sind hergestellt). Alle Klemmungen sind geöffnet. Rechte Position des Ventils 140 KO/L bedeutet, Speicher 144 ist leer, und muß geladen werden. Klemmung 17 ist offen, ebenso liegt der Druck an den Ventilen 82, 84 und 89 an. Dem überlagert kann unabhängig die Schaltung der hydraulischen Klemmung mit den Ventilen 85, 82 und 89 funktionieren. Der Speicherzustand wird in den Positionen KO/DU und KO/L immer über den Drucksensor 51 bei betätigtem Ventil 89 erkannt. In der Schaltstellung K/DU wird weiterhin nicht in den Speicher 144 geladen. Für diesen Zustand kann u. U. ein zusätzlicher Druckschalter am Speicher vergesehen werden. In der linken Position KO/DU wird der Ladedruck des Speicehrs 144 ebenfalls über den Drucksensor bei betätigtem Ventil 89 erkannt. In der Position KO/L in der rechten Position wird Druck auf das Klemmsystem 17 gegeben und auf die Versorgung von Proportionalventil 84. Der Speicherladezustand kann ebenfalls bei betätigtem Ventil 6 über den Drucksensor erkannt werden. Ist in allen drei Fällen das Ventil 89 stromlos geschaltet und kann z. B. bei defektem Magnet nicht betätigt werden, würde der Ladezustand des Speichers 144 nicht mehr erkannt werden. Hier tritt das Druckbegrenzungsventil 160 an der Pumpe in Funktion und ein u. U. zusätzlich vorgesehener Druckschalter an Speicher 144. Gleichzeitig ist zu bedenken, daß bei nicht betätigbarem oder nicht betätigtem Ventil 89, d. h. stromlos offen geschaltetem Ventil, die Klemmung über 82 und 85 in Funktion ist, d. h. das Stellsystem muß ohnehin geklemmt sein (an Drucksensor Tanksignal). In diesem Fall erkennt die Elektronik das Klemmen des Stellsystems 31 über hydraulische Klemmkombination 85, 82 und 89. Das mechanische Klemmsystem kann gleichzeitig eingeschaltet werden. (Pos. K/DU von Ventil 140), egal was für einen Ladezustand der Speicher 144 hat. Wie bei Fig. 6 kann hier ein getrennter "Power Up Check" vorgenommen werden.

## Patentansprüche

1. Hinterradlenkung mit einem Lenkventil (55, 65, 84) zur Ansteuerung eines ein Lenkgestänge (43) betätigenden Hydraulikzylinders (31, 64), dadurch gekennzeichnet, daß der Hydraulikzylinder (31, 64) ein eine Stangenkammer (54, 66) und eine Kolbenkammer (53, 67) aufweisender Differentialstellzylinder (31, 64) ist, daß die Ansteuerung vorzugsweise durch ein 3-Wegeproportionalventil (55, 65, 84) auf der großen Fläche des Differentialstellzylinders erfolgt, und daß der Versorgungsdruck an der Stangenkammer (54, 66) des Differentialstellzylinders anliegt.

2. Hinterradlenkung nach Anspruch 1, dadurch gekennzeichnet, daß das Proportionalventil (55) ein 3-Wegeproportionalventil ist und in einer Endstellung eine Drossel (58) vorsieht für den "fail-safe" Fall, so daß die Kolbenkammer mit dem Tank über diese Drossel verbunden ist.

3. Hinterradlenkung nach Anspruch 1 oder 2, dadurch gekennzeichnet, daß eine Elektronik (33) neben dem Proportionalventil (55) ein Schaltventil (63) ansteuert, daß dann, wenn das Proportionalventil seine drosselnde Endstellung einnimmt, das Schaltventil (63) in seiner stromlosen Stellung eine auf der Achse des Differentialstellzylinders (31, 64) angeordnete Klemmvorrichtung (17) und eine Versorgungsleitung (62) des Proportionalventils (55) mit Tank verbindet.

4. Hinterradlenkung nach Anspruch 3, dadurch gekennzeichnet, daß eine uneingeschränkte Verbindung der Stangenkammer (54) mit dem Pumpenanschluß p über die Versorgungsleitung (62) vorgesehen ist, und daß bei Ausfall der mechanischen Klemmvorrichtung (17) der Differentialstellzylinder (31, 64) auf definierten Anschlag über die Drossel (58) gedrosselt verfährt.

5. Hinterradlenkung nach einem der Ansprüche 3-4, dadurch gekennzeichnet, daß ein Drucksensor (51) vorgesehen ist, und daß dieser den Schaltzustand des Schaltventils (63) abfühlt.

6. Hinterradlenkung nach einem oder mehreren der vorhergehenden Ansprüche, dadurch gekennzeichnet, daß ein Weggeber (41) insbesondere in der Form eines redundanten Weggebers vorgesehen ist.

7. Hinterradlenkung nach einem der Ansprüche 3-6, dadurch gekennzeichnet, daß neben der mechanischen Klemmvorrichtung (17) eine hydraulische Klemmung für den Sttellzylinder (31, 64) vorgesehen ist und daß definierte Endanschläge für den Stellzylinder vorgesehen sind.

8. Hinterradlenkung nach einem der Ansprüche 2-7, dadurch gekennzeichnet, daß ein reines 3-Wegeproportionalventil (84) vorgesehen ist, und zwar zusammen mit zwei 3/2-Wegeschaltventilen (89, 90), und daß ferner zwei Rückschlagventile (82, 85) zur hydraulischen Blockierung des Differentialstellzylinders (31) dienen.

9. Hinterradlenkung nach einem oder mehreren der vorhergehenden Ansprüche, dadurch gekennzeichnet, daß eine Speicherladeeinheit (130) integriert vorgesehen ist

## Claims

1. Rear-wheel steering system with a steering valve (55, 65, 84) for actuating a hydraulic cylinder (31, 64) which activates a steering gear unit (43), characterized in that the hydraulic cylinder (31, 64) is a differential servo-cylinder (31, 64) which has a rod chamber (54, 66) and a piston chamber (53, 67), in that the actuation takes place preferably over the large surface of the differential servo-cylinder by means of a 3-way proportional valve (55, 65, 84), and in that the supply pressure is present at the rod chamber (54, 66) of the differential servo-cylinder.

2. Rear-wheel steering system according to Claim 1, characterized in that the proportional valve (55) is a 3-way proportional valve, and in one limit position provides a restrictor (58) for the "fail-safe" case so that the piston chamber is connected to the reservoir via this restrictor.

3. Rear-wheel steering system according to Claim 1 or 2, characterized in that an electronic system (33) actuates, in addition to the proportional valve (55), an on-off valve (63), in that whenever the proportional valve assumes its throttling limit position, the on-off valve (63) connects, at its de-energized setting, a clamping device (17) arranged on the axle of the differential servo-cylinder (31, 64) and a supply line (62) of the proportional valve (55) to the reservoir.

4. Rear-wheel steering system according to Claim 3, characterized in that an unrestricted connection of the rod chamber (54) to the pump port p via the supply line (62) is provided, and in that, when the mechanical clamping device (17) fails, the differential servo-cylinder (31, 64) moves to a defined stop, throttled via the restrictor (58).

5. Rear-wheel steering system according to one of Claims 3-4, characterized in that a pressure sensor (51) is provided, and in that the latter senses the switched state of the on-off valve (63).

6. Rear-wheel steering system according to one or more of the preceding claims, characterized in that a position sensor (41) is provided, in particular in the form of a redundant position sensor.

7. Rear-wheel steering system according to one of Claims 3-6, characterized in that, in addition to the mechanical clamping device (17), a hydraulic clamp for the servo-cylinder (31, 64) is provided, and in that defined limit stops for the servo-cylinder are provided.

8. Rear-wheel steering system according to one of Claims 2-7, characterized in that a pure 3-way proportional valve (84) is provided, specifically together with two 3/2-way on-off valves (89, 90), and in that, in addition, two non-return valves (82, 85) serve for the hydraulic blocking of the differential servo-cylinder (31).

9. Rear-wheel steering system according to one or more of the preceding claims, characterized in that an accumulator charging unit (130) is provided in an integrated fashion.

## Revendications

1. Direction par roues arrière, comportant une valve (55,65,84) de direction pour la commande d'un cylindre hydraulique (31,64) actionnant une tringlerie (43) de direction, caractérisée en ce que le cylindre hydraulique (31,64) est un cylindre (31,64) de réglage de différentiel comportant une chambre (54,66) de barre et une chambre (53,67) de piston, la commande s'effectue de préférence par une valve (55,65,84) porportionnelle à trois voies sur la grande surface du cylindre de réglage de différentiel et la pression d'alimentation est appliquée à la chambre (54,66) de barre du cylindre de réglage de différentiel.

2. Direction par roues arrière suivant la renvendication 1, caractérisée en ce que la valve (55) proportionnelle est une valve proportionnelle à trois voies et prévoit, dans une position d'extrémité, un étranglement (58) pour le cas "fail-safe", de sorte que la chambre de piston communique avec le réservoir par cet étranglement.

3. Direction par roues arrière suivant la revendication 1 ou 2, caractérisée en ce qu'un dispositif électronique (33) commande, outre la valve (55) proportionnelle, une valve (63) de commande, en ce que lorsque la valve proportionnelle prend sa position d'extrémité d'étranglement, la valve (63) de commande fait communiquer, dans sa position sans courant, un dispositif (17) de serrage monté sur l'axe du cylindre (31,64) de réglage de différentiel et un conduit (62) d'alimentation de la valve (55) porportionnelle avec le réservoir.

4. Direction par roues arrière suivant la revendication 3, caractérisée en ce qu'il est prévu une communication non limitée de la chambre (54) de barre avec le raccord p de pompe par l'intermédaire de la conduite (62) d'alimentation et le cylindre (31,64) de réglage de différentiel se déplace, en cas de défaillance du dispositif (62) de serrage, sur une butée définie, par l'intermédiaire de l'étranglement (58).

5. Direction par roues arrière suivant l'une des revendications 3 et 4, caractérisée en ce qu'un capteur (51) de pression est prévu et que celui-ci détecte l'état de la valve (63) de commande.

6. Direction par roues arrière suivant l'une ou plusieurs des revendications précédentes, caractérisée en ce qu'il est prévu un capteur (41) de course, notamment sous la forme d'un capteur redondant de course.

7. Direction par roues arrière suivant l'une des revendications 3 à 6, caractérisée en ce qu'un dispositif de serrage hydraulique est prévu, en plus du dispositif (17) de serrage mécanique, pour le cylindre (31,64) de réglage et il est prévu pour le cylindre de réglage des butées d'extrémité définies.

8. Direction par roues arrière suivant l'une des revendications 2 à 7, caractérisée en ce qu'il est prévu une valve (84) proportionnelle à trois voies et ce conjointement avec deux valves (89,90) à 3/2 voies, et en outre deux clapets (82,85) antiretour servent au blocage hydraulique du cylindre (31) de réglage de différentiel.

9. Direction par roues arrière suivant l'une ou plusieurs des revendications précédentes, caractérisée en ce qu'une unité (130) de chargement du réservoir est prévue.
